Europäisches Patentamt

European Patent Office

Office européen des brevets

(11) Publication number: **0 348 551**
**A1**

## (12) EUROPEAN PATENT APPLICATION

(21) Application number: 88113851.5

(22) Date of filing: 25.08.88

(51) Int. Cl.⁴: **C02F 1/48 , A61L 2/02 , B03C 1/02**

(30) Priority: 27.06.88 IT 2111288

(43) Date of publication of application:
03.01.90 Bulletin 90/01

(84) Designated Contracting States:
AT BE CH DE ES FR GB GR IT LI LU NL SE

(71) Applicant: **Beruto, Dario**
**Via Acquarone, 4/12**
**I-16125 Genova(IT)**

Applicant: **Grisoni, Angelo**
**Via Chiesa**
**CH-6833 Vacallo(CH)**

(72) Inventor: **Beruto, Dario**
**Via Acquarone, 4/12**
**I-16125 Genova(IT)**
Inventor: **Grisoni, Angelo**
**Via Chiesa**
**CH-6833 Vacallo(CH)**

(74) Representative: **Dr. Ing. A. Racheli & C.**
**Viale San Michele del Carso, 4**
**I-20144 Milano(IT)**

(54) Device and method for the modification of activity of microorganisms contained in liquids without the addition of chemical reagents.

(57) This invention relates to the modification of activity of micro-organisms like yeasts, seaweeds, bacteria etc., which can be contained in diesel, wine, water both for human and industrial use etc., by the temporary agglomeration of the micro-organisms induced by uniform and non-uniform electromagnetic fields followed by a filtration with times and ways compatible with the formed agglomeration.

The electromagnetic fields can be generated by a device formed of permanent magnets, (30) for example of the type described here, by which the solution is made to pass before being filtered.

FIG. 2

# DEVICE AND METHOD FOR THE MODIFICATION OF ACTIVITY OF MICRO-ORGANISMS CONTAINED IN LIQUIDS WITHOUT THE ADDITION OF CHEMICAL REAGENTS

This invention concerns means capable of changing the activity of micro-organisms contained in liquids, so as to allow their separation. Normally the modification of the activity of micro-organisms is obtained by adding chemical reagents. These however change the nature of the liquid and add considerable costs to this further treatment.

Therefore the aim of this invention is the modification of activity of micro-organisms and/or their agglomeration without producing any chemical alteration in the liquid which contains them.

The action of uniform and non-uniform electric fields on materials with electric charge and on others which are electrically neutral is known and used in operations like electrophoresis and dielectrophoresis for the treatment of dusts and bacteria contained in water, the removal of seaweeds, the separation of cells etc.

According to the present technology the uniform and non-uniform electric fields are carried out with devices which directly provide the electric field. The same or a similar situation can nevertheless be formed inside the liquid phase containing electrically charged particles and/or ions when it crosses magnetic fields generated by permanent magnets placed in an appropriate way. Devices of this type - like the one shown here -offer undoubted advantages thanks to the possibility of direct application on tubing, to their greater simplicity of installation, to the minor consumption and to the elimination of any danger of contamination of the solutions.

This invention is based on the observation that electric fields, however produced, also act on micro-organisms even if in a complex and different way, according to the distribution of the field in the liquid phase, as well as to the type of micro-organism treated. For example laboratory tests have been carried out on saccharomyces in distilled water, with a concentration of 1/1000 and dispersed on a slide modified in a way to be able to apply a non-uniform electric field of about 1MHz frequency and about a difference of potential$\Delta E$ 500 V/cm. These experiments have shown how the colonies of saccharomyces - which when isolated had a size of 2-5 $\mu$m - under the action of the field lined up and agglomerated until they reached a size ten times greater that the initial size. Such agglomeration continued for 10' after the action of the electric field had stopped.

According to this invention a permanent magnetic device is used, inserted between the feeder line and a filter, in such a way as to generate, on the inside of the liquid, the electric field necessary for producing the agglomeration of the considered micro-organisms, then to filter the liquid in suitable times and ways so as to eliminate the agglomerates before they are separate.

The device for the treatment can be of the type described in European patent No. A-86102164.0 or of the multiple type described hereunder with reference to the attached drawings in which:

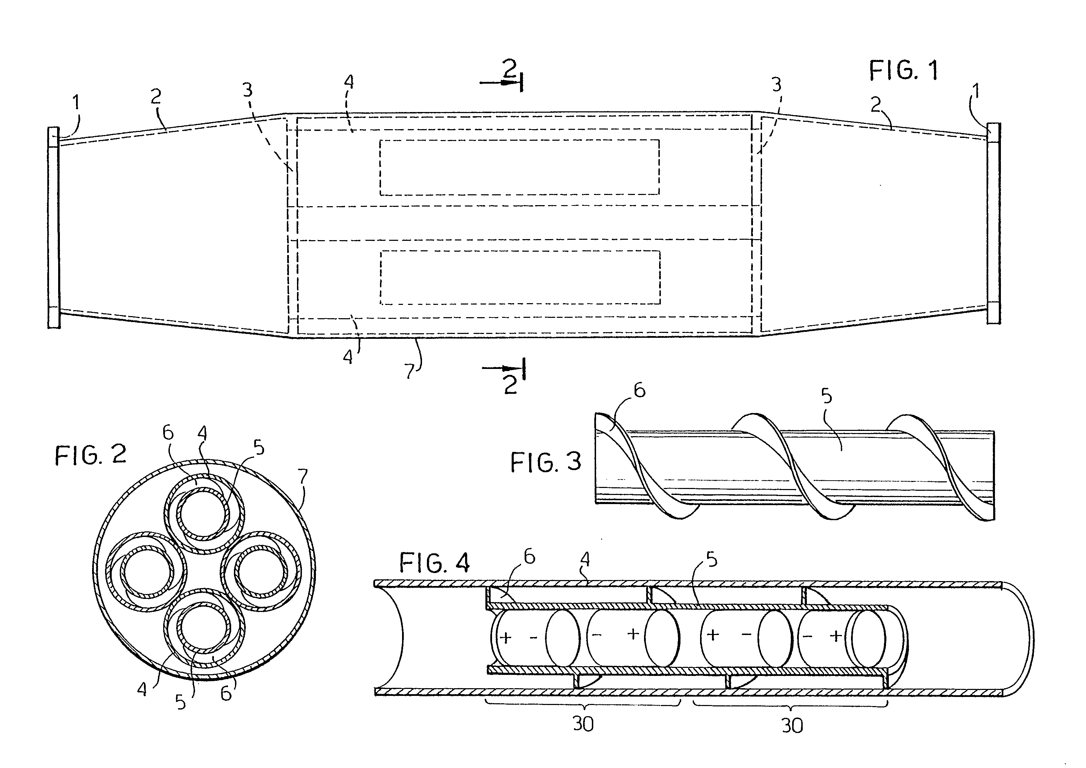

figure 1 is a schematic external view of the proposed device;

figure 2 is the view of the section 2-2 of figure 1; and

figures 3 and 4 are respectively lateral and section views of a single element forming the device of figure 1.

With reference to the attached drawings it can be noted that the steel coupling flange is indicated with 1, the steel diffuser with 2, a brass spacer plate with 3 and an iron tube surrounding each single element, with 4. Each iron tube 4 forms a magnetic element. These elements are placed one parallel to the other and all parallel to the flow of liquid.

. On the inside of a brass tube 5 pairs 30 of permanent magnets 14 are lined up with their negative poles facing each other; the pairs 30 being spaced one from the other, so that their fields do not interfere with each other.

Between the brass tube 5 and the iron tube 4 a spiral 6 is provided in a non-magnetic material which serves to fix the tube 5 and to guide the liquid flow.

The central part of the external body is made of a stainless sheet steel cover 7.

The whole apparatus is preferably covered with teflon on the inside.

In the drawings four single elements have been shown, joined in a group; this embodiment can, for example, be used for liquids which flow in tubings with a diameter of 100 mm. Further embodiments can be carried out by a unit formed by six, eight or more parallel elements.

In the wine industry and in particular that of sweet sparkling wines, the hydroalcoholic solution/suspension after the fermentation also contains yeasts, non-decomposed sugars, carbonate and bicarbonate ions and free carbon dioxide. The yeast contents are such that with the sugars present and at an appropriate temperature, they will ferment with an ensuing loss of the aromatic and taste characteristics of the wine. Present technology resorts to the use of sterile filtration to overcome this problem. Due to the fact that the yeasts are very small these filtration methods require the use of expensive filtering membranes, with small pores, through which the solution/suspension must pass with the danger of also partly degassing the sparkling wine.

The teflon covered device, described above, placed in the main tubing before a filtering device carried out with normal filtering boards having pores of 10-20 μm has allowed the lowering of the number of yeasts per litre to a value of 2-3. According to the technology preceding this invention this number was 20-30 times higher and the filtered product needed further treatment before being bottled.

This way of proceeding can be repeated several times in succession in order to increase the effect.

The tests carried out on industrial systems have shown that the passage through the proposed device has made the solution/suspension of the wine practically sterile as far as subsequent in-bottle anaerobic fermentation is concerned.

In order to increase the variation of activity of the micro-organisms it is also possible to put the liquid which has already been treated in contact with other colonies of micro-organisms.

## Claims

1. Procedure according to which the modification of the activity and/or the agglomeration of micro-organisms contained in liquids (diesel fuel, wines, water for both human and industrial use, milk, etc.) is carried out by using electric fields induced in the liquid in movement by static magnetic fields.

2. Procedure according to claim 1 in which the elimination by filtration of the agglomerated micro-organisms is also provided.

3. Procedure according to claim 1 or 2, characterized in that the liquid phase is made to pass through a device made of magnetic fields each one formed of pairs of permanent magnets, the similar poles of which are facing.

4. Procedure according to any one of the previous claims, characterized in that it is repeated several times in succession.

5. Procedure according to any one of the previous claims, characterized in that in order to vary the activity of the micro-organisms the treated liquid can also be put in contact with other colonies of micro-organisms.

6. Device for the embodiment of magnetic fields, characterized in that it is formed of several magnetic elements, each one consisting of at least a pair of facing permanent magnets (30), each magnetic element having its own axis placed parallel to the axis of the flow of liquid, but offset with respect to that of the adjacent magnetic element.

7. Device according to claim 6, characterized in that between the pairs of magnets (30) and a ferromagnetic tube, (4) a non-magnetic spiral (6) is placed which can make the fluid flow in a helical direction and can support the magnets (30) with respect to said ferromagnetic tube (4).

FIG. 1

FIG. 2

FIG. 3

FIG. 4

EP 0 348 551 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 237 022 (VARGA)<br>* Claim 1; page 2, last 5 lines - page 3, line 5 * | 1 | C 02 F    1/48<br>A 61 L    2/02<br>B 03 C    1/02 |
| Y | | 3,6,7 | |
| Y | EP-A-0 119 368 (HYDRATEC)<br>* Figure 1; claims * | 3,6,7 | |
| A | DE-A-3 443 810 (PILGRIMM)<br>* Columns 1,4; page 6, line 21 - page 7, line 20 * | 2 | |
| A | AU-A- 495 329 (R.A. RIGBY)<br>* Claims 1,4,7 * | 1,2 | |
| A,D | EP-A-0 195 934 (GRISONI)<br>* Figure 1 * | 3,6,7 | |
| A | US-A-4 659 479 (R.E. STICKLER) | | |

TECHNICAL FIELDS SEARCHED (Int. Cl.4)

C 02 F

The present search report has been drawn up for all claims

| Place of search | Date of completion of the search | Examiner |
|---|---|---|
| THE HAGUE | 23-01-1989 | KASPERS H.M.C. |